# EUROPÄISCHE PATENTSCHRIFT

(11) **EP 1 004 526 B1**
(45) Veröffentlichungstag und Bekanntmachung des Hinweises auf die Patenterteilung: **19.02.2003**
(21) Anmeldenummer: 99122719.0
(22) Anmeldetag: 16.11.1999
(51) Int. Cl.: B65G 53/60, B01D 46/10

(54) **Vorrichtung zum Abscheiden von Feststoffen aus einem Luftstrom**
Device for separating solids from an air stream
Dispositif pour séparer des solides d'un courant d'air

(30) Priorität: 27.11.1998 DE 29821221 U
(43) Veröffentlichungstag der Anmeldung: 31.05.2000
(73) Patentinhaber: Höcker Polytechnik GmbH, 49176 Hilter (DE)
(72) Erfinder: Höcker, Frank, 49076 Osnabrück (DE)
(74) Vertreter: Busse & Busse Patentanwälte

(56) Entgegenhaltungen:
- EP-A- 0 192 803
- WO-A-97/20761
- FR-A- 2 674 144
- US-A- 1 693 754

## Beschreibung

Die Erfindung betrifft eine Vorrichtung zum Abscheiden von Feststoffen aus einem Luftstrom, gemäß dem Oberbegriff des Anspruchs 1.

Bekannte Vorrichtungen zur Feststoffabscheidung aus einem Luftstrom (EP 0 192 803) sind mit einer Zellenradschleuse versehen, in deren anschlußseitig einen Luftstrom aufnehmender Gehäusetrommel ein Zellenrad drehbar abgestützt ist. Über die Anschlußöffnung werden grob- und feinkörnige Feststoffteilchen in diese Gehäusetrommel gefördert und mittels eines wandungsseitig die Gehäusetrommel begrenzenden Siebes die groben Teile abgeschieden und über eine Austragsöffnung abgefördert. Der noch staubförmige Feinteile enthaltende Luftstrom wird über einen Leitungsanschluß in Strömungsrichtung hinter dem Sieb einem Staubfilter zugeführt, der in Abständen zu säubern ist.

Die Erfindung befaßt sich mit dem Problem, die Baugruppen zum Abscheiden von groben und feinen Feststoffen aus einem Luftstrom zu einer gemeinsamen Vorrichtung zusammenzufassen, bei der mit geringem technischen Aufwand eine Ablagerung von feinen Staubteilen am Sieb verhindert ist, wobei eine kompakte Anordnung der Bauteile auch bei im Nahbereich des Siebes befindlichem Staubfilter eine automatische Entstaubung mit geringem Steuerungsaufwand ermöglicht.

Ausgehend von einer Vorrichtung nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 16 verwiesen.

Die erfindungsgemäße Vorrichtung zum Abscheiden von Feststoffen aus einem Luftstrom ist als eine kompakte Baueinheit mit oberhalb der Zellenradschleuse angeordnetem Staubfilter ausgebildet, wobei die Baugruppen so in das Abscheidungssystem integriert sind, daß innerhalb der Baueinheit ohne gegenseitige Funktionsbeeinflussung ein optimaler Abscheidungsprozeß gewährleistet ist und zusätzlich zu dem in einer Hauptströmungsrichtung erfolgenden Grobund Feinfiltervorgang eine automatische Entstaubung der Vorrichtung im Bereich des Feinfilters durchführbar ist.

Diese Entstaubung ist mit geringem technischem Aufwand, wenigen Zusatzbauteilen und einer einfach anpaßbaren Steuerung erreichbar. Bei der Entstaubung kann dem hinter dem Sieb befindlichen staubhaltigen Luftvolumen mittels einer einen oberflächigen Staubabtrag bewirkenden Luftstromumlenkung eine Richtungskomponente zum Bereich einer im Nahbereich der Gehäusetrommel befindlichen zweiten Auswurföffnung hin vermittelt werden. Mit dieser Luftstromumlenkung können bereits während des Filterbetriebes Ablagerungen auf der Rückseite des Siebes vermieden werden und über einen zusätzlichen Querlufteintrag mittels einer Umschaltung der Vorrichtungssteuerung ist die Luftstromumlenkung zu der zweiten Auswurföffnung hin für eine schnelle und automatisch regelbare Reinigung im Bereich des Feinfilters nutzbar.

Bei einem derartigen Reinigungszyklus wird der Staubfilter mittels einer mechanischen Rüttelvorrichtung und/oder einem entgegen der Strömungsrichtung der Vorrichtung zugeschalteten Reinigungsluftstrom so gereinigt, daß die vom Staubfilter abgelösten, teilweise verklumpten Staubreste abfallen und unter Schwerkraftwirkung in Richtung der Sieb-Rückseite verlagert werden. Gleichzeitig mit diesem Abreinigen des Staubfilters kann über die Anschlußöffnung der Zellenradschleuse saubere Frischluft so angesaugt werden, daß diese durch die Durchlaßöffnungen des Siebes den abgelösten Staubresten entgegengepreßt wird. Im Bereich der Durchlaßöffnungen sind Leitflächen vorgesehen, so daß die in Strömungsrichtung eintretende Frischluft eine im wesentlichen horizontale Umlenkung erfährt, damit dem staubhaltigen Luftvolumen ein Luftstrom mit einer Richtungskomponente zur Auswurföffnung der Nebenschleuse hin überlagert wird, die in Richtung des Siebes abfallenden Staubreste zur Auswurföffnung hin gelangen und hier abgefördert werden.

Zur strömungstechnischen Unterstützung dieses Reinigungsvorganges ist in gleichwirkender Ausführung bzw. als zusätzliche Baugruppe vorgesehen, oberhalb der Sieb-Rückseite einen zusätzlichen Querluftförderstrom aufzubauen, der während der Abreinigung des Feinfilters zugeschaltet wird und die Staubteile zum Nebenauswurf hin ablenkt. Der Umlenkungsvorgang zur Reinigung der Sieb-Rückseite kann mittels eines zusätzlichen Ventilators und/oder eines Druckluftspeichers mit Düse erfolgen, so daß über eine entsprechende Steuereinheit der Vorrichtung in vorbestimmten Abständen ein automatischer Reinigungsvorgang erfolgt.

Diese automatische Abreinigung des Feinfilters kann durch eine optimale Positionierung des in der Gehäusetrommel wandungsseitig anliegenden Zellenrades in Kombination mit einer verminderten Reinluft-Saugleistung des Hauptventilators der Vorrichtung gesteuert werden. Während einer Abreinigung des Feinfilters (beispielsweise über eine Rüttelvorrichtung) wird mittels eines sensorgesteuert positionierten Zellenrades ein Teilbereich des Siebes abgedeckt, so daß die im Bereich der Zellenradschleuse angesaugte Frischluft das Sieb in einem zum Nebenauswurf beabstandeten Bereich mit größerem Druck durchströmen kann und damit in diesem durchströmten Bereich die Ablagerung von verklumpten Staubresten vermieden ist. Durch ein Verschwenken des gesteuerten Zellenrades wird das Sieb zunehmend für den Luftstrom freigegeben und damit der Austrag der Staubreste über den gesamten oberen Bereich des Siebes erreicht.

Weitere Einzelheiten und vorteilhafte Wirkungen der Erfindung ergeben sich aus der nachfolgenden Beschreibung und der Zeichnung, die ein Ausführungsbeispiel der erfindungsgemäßen Vorrichtung veranschaulichen. In der Zeichnung zeigen:
- Fig. 1: eine teilweise geschnittene Vorderansicht der Vorrichtung mit in einer Übereinanderlage angeordneten Baugruppen,
- Fig. 2: eine teilweise geschnittene Seitenansicht der Vorrichtung gemäß Fig. 1,
- Fig. 3: eine teilweise geschnittene Draufsicht der Vorrichtung gemäß Fig. 1,
- Fig. 4: eine geschnittene Prinzipdarstellung der Vorrichtung im Bereich einer Zellenradschleuse,
- Fig. 5: eine Prinzipdarstellung ähnlich Fig. 4 mit einer zweiten Ausführung der Zellenradschleuse,
- Fig. 6: eine Prinzipdarstellung ähnlich Fig. 4 mit einer Leitflächenprofile aufweisende Gehäusetrommel in der Zellenradschleuse,
- Fig. 7: eine vergrößerte Ausschnittsdarstellung der Gehäusetrommel im Bereich eines Siebes,
- Fig. 8: eine Prinzipdarstellung der Vorrichtung ähnlich Fig. 4 mit einem veränderten Zellenrad in der Zellenradschleuse, und
- Fig. 9: eine vergrößerte Ausschnittsdarstellung des Zellenrads im Bereich einer Zellenwand gemäß einer Linie IX-IX in Fig. 8.

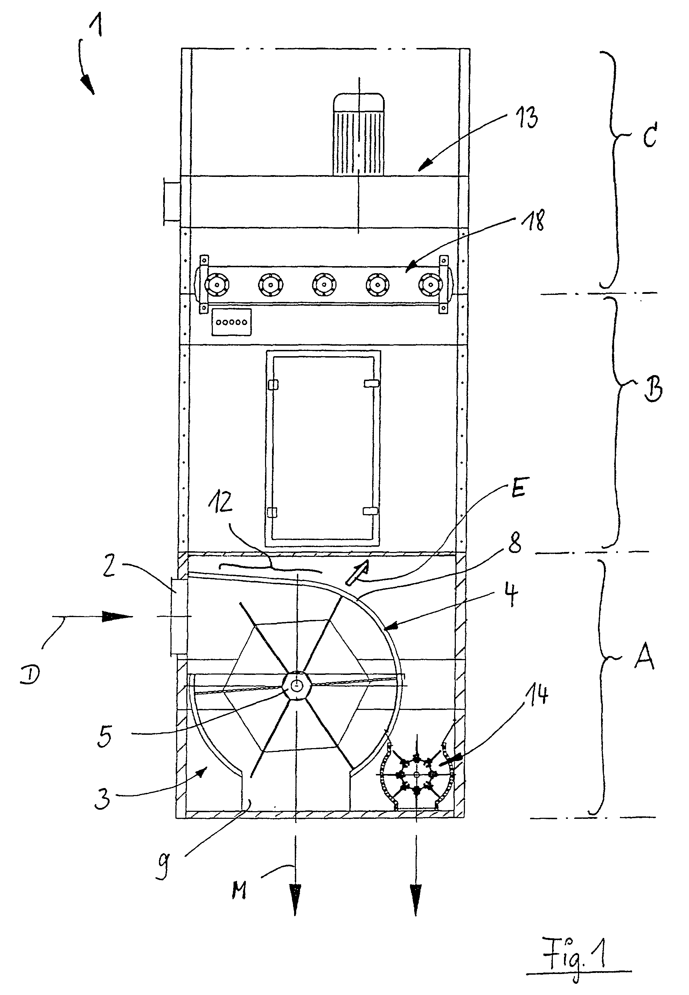

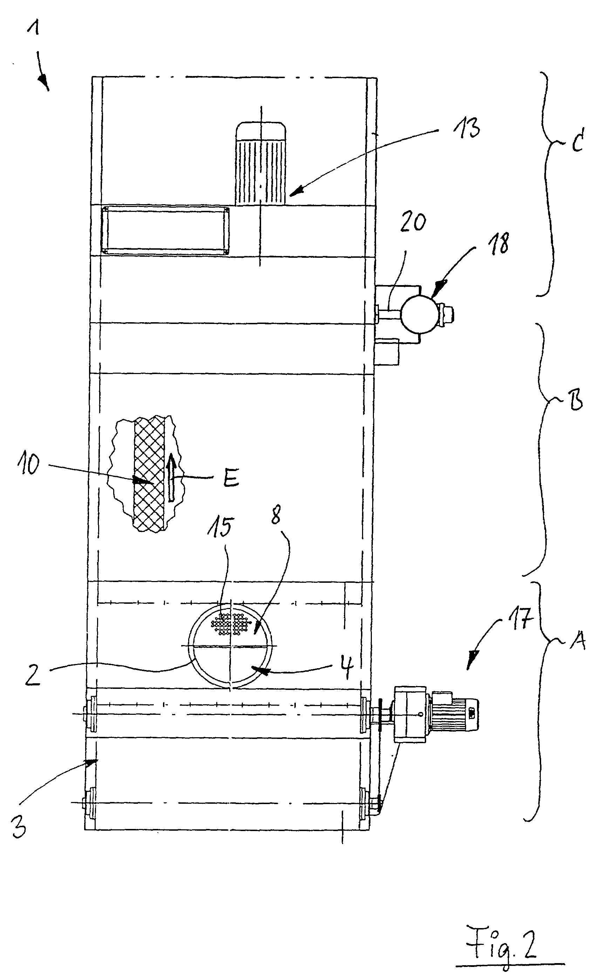

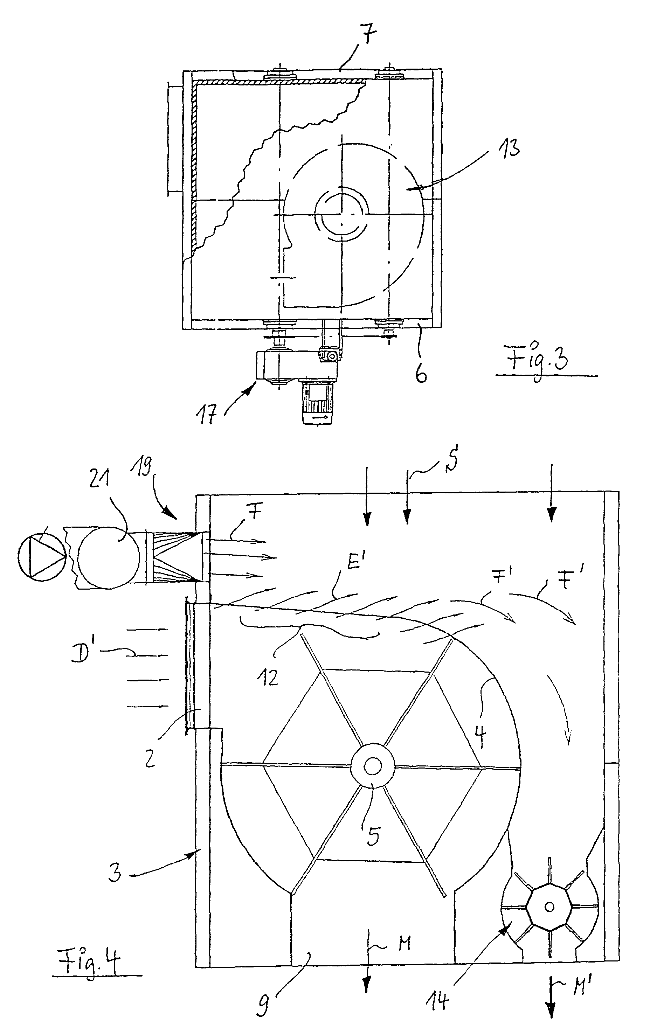

In Fig. 1 ist eine insgesamt mit 1 bezeichnete Vorrichtung zum Abscheiden von Feststoffen aus einem Luftstrom (Pfeil D) dargestellt. Die Vorrichtung 1 weist eine den Luftstrom D über eine Anschlußöffnung 2 aufnehmende Zellenradschleuse 3 auf, in deren Gehäusetrommel 4 ein im Bereich von Seitenwänden 6,7 (Fig. 3) abgestütztes Zellenrad 5 drehbar ist. Die Gehäusetrommel 4 weist einerseits ein die groben Feststoffteilchen aus dem Luftstrom D abscheidendes Sieb 8 auf und andererseits ist zum Austrag der abgetrennten groben Feststoffe (Pfeil M) eine Auswurföffnung 9 vorgesehen. Ein noch staubförmige Feinteile enthaltender Luftstrom (Pfeil E) wird in Strömungsrichtung hinter dem Sieb 8 einem Staubfilter 10 (Fig. 2) zugeführt.

Die Vorrichtung 1 ist in erfindungsgemäßer Ausführung mit einer Zellenradschleuse 3 versehen, die in Strömungsrichtung des einlaßseitigen Luftstromes D bzw. des (staubhaltigen) Luftstromes E hinter einem im wesentlichen waagerechten oberen, dem Staubfilter 10 zugewandten Bereich 12 des Siebes 8 mit einer einen oberflächigen Staubabtrag an dessen rückseitigem Bereich bewirkenden Luftstromumlenkung versehen ist. Diese Luftstromumlenkung ist die Grundlage für konstruktive Veränderungen des Abscheidungssystems, das mit geringem Aufwand an kundenspezifisch unterschiedliche Einbaubedingungen, z.B. an die Einbauhöhe, angepaßt werden kann.

Die Vorrichtung 1 weist im Bereich der Zellenradschleuse 3 mit dem Sieb 8 eine Baugruppe A, im Bereich des Feinteile des Luftstromes E erfassenden Staubfilter 10 eine Baugruppe B und im Bereich des den Luftstrom D,E mittels Unterdruck erzeugenden Hauptventilators 13 eine Baugruppe C auf, die in einer Übereinanderanordnung A,B,C (Fig. 1) eine funktionsintegrierte Baueinheit in vorteilhaft kompakter Bauweise bilden können. Die Zellenradschleuse 3 als an sich bekannte Baugruppe A weist dabei im Nahbereich ihrer wandungsseitig mit dem Sieb 8 versehenen Gehäusetrommel 4 eine insgesamt mit 14 bezeichnete Nebenschleuse auf, die für den Austrag der vom Staubfilter 10 der Baugruppe B abgeschiedenen Staubreste M' vorgesehen ist.

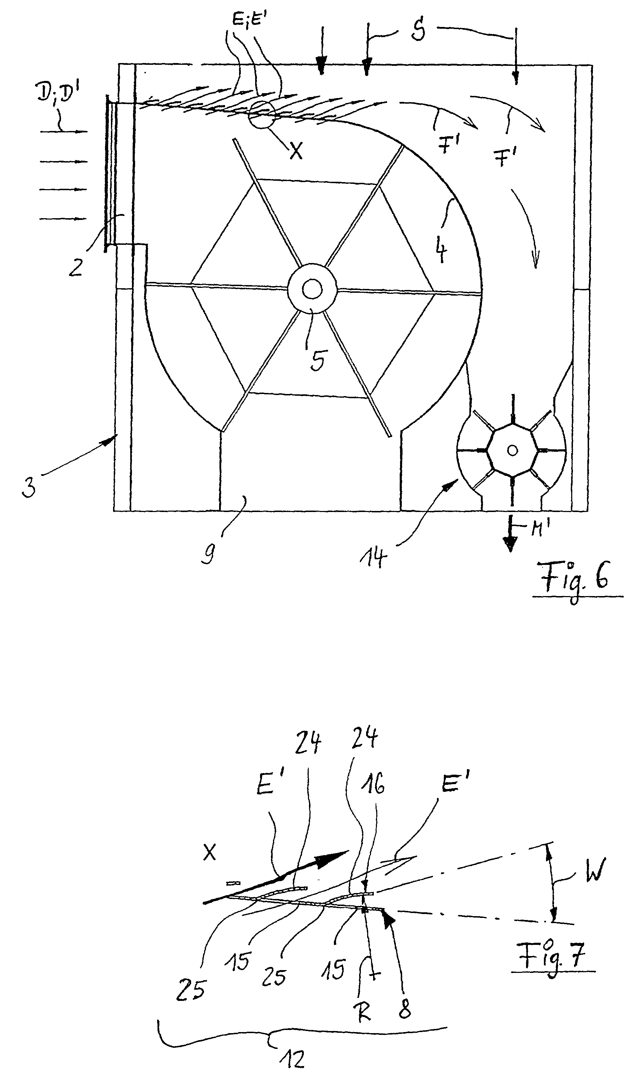

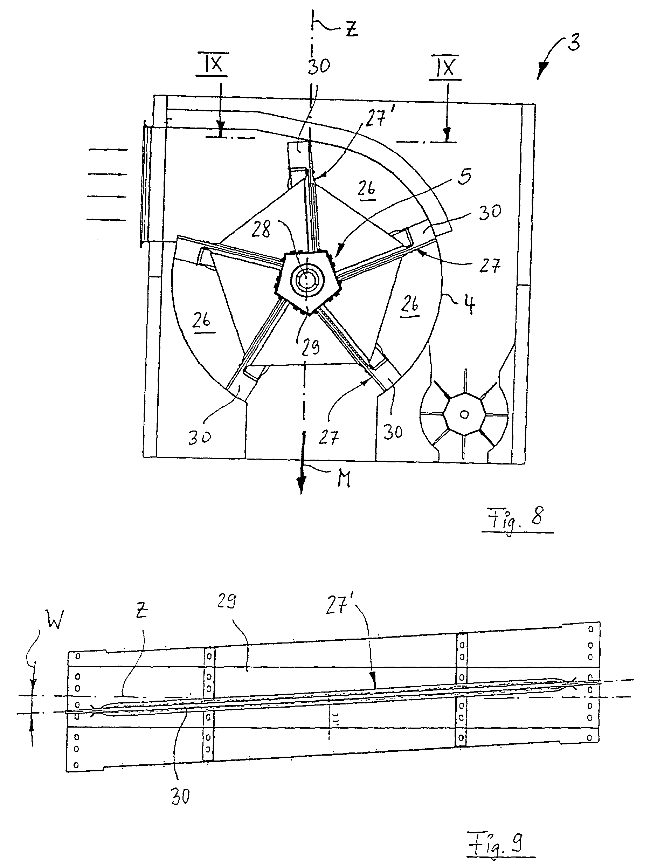

Bei einem automatischen Säuberungszyklus innerhalb der Vorrichtung 1 kann auch der obere, im wesentlichen waagerechte Bereich 12 des Siebes 8 dadurch gesäubert werden, daß in konstruktiv einfachster Ausführung die Durchtrittsöffnungen 15 (Fig. 2) im oberen Bereich 12 des Siebes 8 mit einer dem passierenden Luftstrom E' eine Richtungskomponente für den oberflächigen Staubabtrag aufprägenden Durchlaßkontur ausgebildet sind. Diese Durchlaßkontur kann in zweckmäßiger Ausführung von den Durchlaßöffnungen 15 im oberen Bereich 12 des Siebes 8 zugeordneten Leitflächenprofil 16 (Fig. 6, Fig. 7) gebildet sein.

Die Baueinheit A,B,C weist eine gemeinsame Steuereinheit (nicht dargestellt) auf, mittels der ein Antrieb 17 der beiden Schleusen 3 und 14, der Hauptventilator 13, eine als Druckluft-Impuls-Rüttler 18 ausgebildete Druckluftzufuhr für einen Reinigungsluftstrom im Staubfilter 10 und ein zur Luftstromumlenkung vorgesehener Drucklufteintrag 19 in die Zellenradschleuse 3 so steuerbar sind, daß mittels eines definierten Luftstromes F (Fig. 4)oberhalb des Siebes 8 Staubablagerungen aus dem verwirbelten Luftvolumen insbesondere dann verhindert sind, wenn der Staubfilter 10 gereinigt wird.

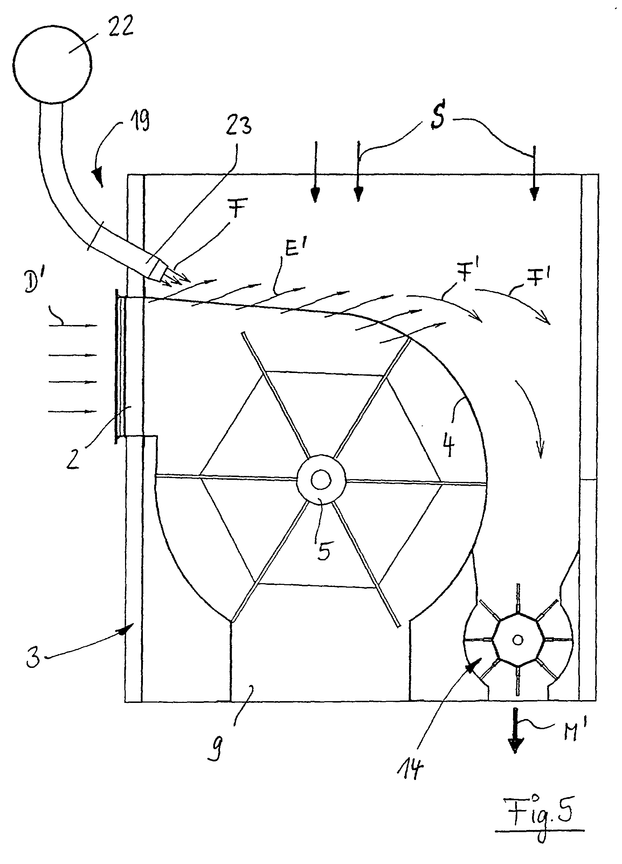

In den Prinzipdarstellungen gemäß Fig. 4 bis 6 sind die Strömungsverhältnisse im oberen Bereich 12 des Siebes 8 während der Reinigung dargestellt, wobei die Darstellungen gemäß Fig. 4 und 5 die durch den zusätzlichen Drucklufteintrag 19 erzeugte Luftstromumlenkung gemäß Richtungspfeil F im Zusammenwirken mit dem Reinluftstrom E' verdeutlichen, der mittels des insbesondere mit geringer Leistung zugeschalteten Hauptventilators 11 über eine Frischluftzufuhr D' im Bereich der Anschlußöffnung 2 erzeugt wird. Die mit Pfeilen S veranschaulichte Zufuhr von Staubresten aus dem Feinfilter 10 kann gleichzeitig erfolgen, wozu die oberhalb des Feinfilters 10 vorgesehene mechanische Abreinigungsvorrichtung 18 (Fig. 2)betätigt wird und die weitgehend verklumpten Staubreste S unter Schwerkraftwirkung auch in Richtung des Siebes 8 fallen. Für diese Abreinigung ist im Bereich der oberen Hauptventilator-Baugruppe 13 die entgegen der Strömungsrichtung E der Vorrichtung 1 einen Reinigungsluftstrom im Staubfilter 10 erzeugende Druckluftzufuhr bei 20 vorgesehen, wobei die Abreinigungsvorrichtung 18 in Form des Druckluft-Impuls-Rüttlers 18 ausgebildet sein kann.

Für den Drucklufteintrag 19 im Bereich der Zellenradschleuse 3 ist diese mit einem zuschaltbaren Zusatzgebläse 21 (Fig. 4) oder in einer zweiten Ausführung mit einem externen Druckluftspeicher 22 (Fig. 5) versehen, wobei dieser Drucklufteintrag 19 jeweils oberhalb der Anschlußöffnung 2 in die Gehäusetrommel 4 ausmündet. Über eine Düse 23 kann der Drucklufteintrag 19 positionsgenau auf das Sieb 8 gerichtet werden (Fig. 5).

Die Zusammenschau von Fig. 6 und Fig. 7 verdeutlicht die Luftstromumlenkung mittels des Leitflächenprofils 16, das von jeweiligen im oberen Bereich der Durchlaßöffnungen 15 abgestützten und deren Durchlaßkontur in Strömungsrichtung E' verlängernden Leitansätzen 24 gebildet ist. Diese Leitansätze 24 erstrecken sich nur über einen Teil des Umfangs der Durchlaßöffnungen 15, wobei die Leitansätze 24 an einem dem Einlaß des Luftstromes E' zugewandten Umfangsteil 25 der Durchlaßöffnung angesetzt sind. Mit einem Winkel W ist verdeutlicht, daß die Leitansätze 24 eine dem Luftstrom E' die Richtungskomponente aufprägende Schrägstellung zum oberen Bereich 12 des Siebes 8 aufweisen. Zusätzlich können die Leitansätze 24 in Strömungsrichtung E' bogenförmig (Radius R) so ausgebildet, daß eine weitere Verstärkung der Umlenkung in Richtung zum Materialaustrag M' der Nebenschleuse 14 (Fig. 5) erreichbar ist.

Für den vorbeschriebenen Entstaubungszyklus der Vorrichtung 1 ist im oberen Bereich 12 des Siebes 8 von besonderer Bedeutung, daß der Öffnungsquerschnitt der Durchlaßöffnungen 15 von den Leitansätzen 24 so übergriffen ist, daß in Draufsicht eine im wesentlichen vollständige Abdekkung der Öffnungsquerschnitte erreicht ist. Die beim Abrütteln des Filters 10 in Richtung S auf dem Sieb 8 zur Auflage gelangenden Staubreste können nicht bis in die Gehäusetrommel 4 hindurchfallen, so daß eine Verstopfung der Durchlaßöffnungen 15 bzw. der Eintritt von Staubresten durch das Sieb 8 in den Bereich der Zellenradschleuse 3 zuverlässig verhindert sind und damit auch die Sicherheit der Baueinheit A,B,C unter rauhen Betriebsbedindungen gewährleistet ist.

In Fig. 8 ist die Zellenradschleuse 3 in einer zweiten Ausführung dargestellt, wobei das Zellenrad 5 mit fünf Zellenwänden 27 versehen ist (in Fig. 4 bis Fig. 6 sind jeweils sechs Zellenwände 27 dargestellt), die jeweilige Zellen 26 in der im wesentlichen zylindrischen Gehäusetrommel 4 bilden. In Zusammenschau mit Fig. 9 wird deutlich, daß die Zellenwände 27 im Bereich einer Zellenradwelle 28 auf einem Nabenteil 29 abgestützt sind und jeweils eine eine achsparallele Mantellinie des Trommelmantels schneidende Schrägstellung W aufweisen, wobei diese achsparallele Mantellinie im Bereich der Zellenwand 27' bei der Darstellung in Fig. 8 mit der Mittellängsebene Z der Welle 28 im wesentlichen zusammenfällt. Diese Schrägstellung W bewirkt beim Drehen des Zellenrades 5 eine gleichmäßige Zunahme der Dichtungsanlage jeweiliger endseitig an den Zellenwänden 27, 27' vorgesehener Dichtlippen 30 an der zylindrischen Mantelinnenseite der Gehäusetrommel 4, so daß ein schlagartiger Dichtungseingriff vermieden, der Luftstrom in der Vorrichtung 1 kontinuierlich geteilt und damit ein von der Vorrichtung 1 verursachtes "Atem-Geräusch" wesentlich reduziert wird.

## Patentansprüche

1. Vorrichtung zum Abscheiden von Feststoffen aus einem Luftstrom (D), mit einer diesen über eine Anschlußöffnung (2) aufnehmenden Zellenradschleuse (3) mit einer ein drehbar abgestütztes Zellenrad (5) aufweisenden Gehäusetrommel (4), die einerseits zumindest bereichsweise ein grobe Feststoffteilchen aus dem Luftstrom (D) abscheidendes Sieb (8) und andererseits eine Auswurföffnung (9) für die abgetrennten groben Feststoffe (M) aufweist, und wobei ein noch staubförmige Feinteile enthaltender Luftstrom (E) in Strömungsrichtung hinter dem Sieb (8) einem Staubfilter (10) zugeführt wird, **dadurch gekennzeichnet, daß** die Zellenradschleuse (3) in Strömungsrichtung des staubhaltigen Luftstromes (D) hinter einem im wesentlichen waagerechten oberen, dem Staubfilter (10) zugewandten Bereich (12) des Siebes (8) mit einer einen oberflächigen Staubabtrag an dessen rückseitigem Bereich (12) bewirkenden Luftstromumlenkung (F') versehen ist.

2. Vorrichtung nach Anspruch 1, **dadurch gekennzeichnet, daß** die Durchlaßöffnungen (15) im oberen Bereich (12) des Siebes (8) mit einer dem Luftstrom (E,E') eine Richtungskomponente für den oberflächigen Staubabtrag aufprägenden Durchlaßkontur ausgebildet sind.

3. Vorrichtung nach Anspruch 1 oder 2, **dadurch gekennzeichnet, daß** die Durchlaßöffnungen (15) im oberen Bereich (12) des Siebes (8) ein Leitflächenprofil (16) aufweisen.

4. Vorrichtung nach einem der Ansprüche 1 bis 3, **dadurch gekennzeichnet, daß** die Zellenradschleuse (3) oberhalb des Siebes (8) zur Luftstromumlenkung (F') einen zusätzlichen Drucklufteintrag (19) aufweist.

5. Vorrichtung nach einem der Ansprüche 1 bis 4, **dadurch gekennzeichnet, daß** die Zellenradschleuse (3) mit dem Sieb (8), der Feinteile des Luftstromes (E) erfassende Staubfilter (10) und eine den Luftstrom (D,D') mittels Unterdruck erzeugende Hauptventilator-Baugruppe (13) in Übereinanderanordnung eine Baueinheit (A,B,C) bilden.

6. Vorrichtung nach einem der Ansprüche 1 bis 5, **dadurch gekennzeichnet, daß** die Zellenradschleuse (3) im Nahbereich ihrer das Sieb (8) aufweisenden Gehäusetrommel (4) eine Nebenschleuse (14) für den Austrag der vom Staubfilter (10) abgeschiedenen Feinteile (11') aufweist.

7. Vorrichtung nach Anspruch 6, **dadurch gekennzeichnet, daß** die Zellenradschleuse (3) und die Nebenschleuse (14) einen gemeinsamen Antrieb (17) aufweisen.

8. Vorrichtung nach einem der Ansprüche 1 bis 7, **dadurch gekennzeichnet, daß** im Bereich der oberen Hauptventilator-Baugruppe (13) eine entgegen der Strömungsrichtung (E,E')einen Reinigungsluftstrom im Staubfilter (10) erzeugende Druckluftzufuhr (18) vorgesehen ist.

9. Vorrichtung nach einem der Ansprüche 1 bis 8, **dadurch gekennzeichnet, daß** die Baueinheit (A,B,C) im Bereich der Zellenradschleuse (3) für deren zusätzlichen Drucklufteintrag (19) mit einem zuschaltbaren Zusatzgebläse (21) und/oder einem externen Druckluftspeicher (22) verbunden ist, der oberhalb der Anschlußöffnung (2) nahe der Gehäusetrommel (4) ausmündet.

10. Vorrichtung nach einem der Ansprüche 1 bis 9, **dadurch gekennzeichnet, daß** die Baueinheit (A,B,C) mit einer gemeinsamen elektronischen Steuereinheit für den Antrieb der beiden Schleusen (3,14), den Hauptventilator (13), die Druckluftzufuhr (18) des Reinigungsluftstromes und den zusätzlichen Drucklufteintrag (19) in die Zellenradschleuse (3) versehen ist.

11. Vorrichtung nach einem der Ansprüche 1 bis 10, **dadurch gekennzeichnet, daß** das Leitflächenprofil (16) im oberen Bereich (12) der Durchlaßöffnungen (15) von deren Durchlaßkontur in Strömungsrichtung (E') verlängernden Leitansätzen (24) gebildet ist.

12. Vorrichtung nach Anspruch 11, **dadurch gekennzeichnet, daß** sich die Leitansätze (24) nur über einen Teil des Umfangs der Durchlaßöffnungen (15) erstrecken.

13. Vorrichtung nach Anspruch 11 oder 12, **dadurch gekennzeichnet, daß** die Leitansätze (24) an den dem Luftstromeinlaß zugewandten Umfangsteil (25) der Durchlaßöffnungen (15) angesetzt sind und eine die Richtungskomponente aufprägende Schrägstellung (Winkel W) aufweisen.

14. Vorrichtung nach einem der Ansprüche 11 bis 13, **dadurch gekennzeichnet, daß** die Leitansätze (24) in Strömungsrichtung (E') bogenförmig (Radius R) ausgebildet sind.

15. Vorrichtung nach einem der Ansprüche 11 bis 14, **dadurch gekennzeichnet, daß** der Öffnungsquerschnitt der Durchlaßöffnungen (15) von den Leitansätzen (24) in Draufsicht im wesentlichen vollständig abgedeckt ist.

16. Vorrichtung nach einem der Ansprüche 1 bis 15, **dadurch gekennzeichnet, daß** das Zellenrad (5) zumindest zwei als Austragflügel für die groben Feststoffteilchen (M) wirksame und jeweilige Zellen (26) bildende Zellenwände (27,27') aufweist, die mit einer eine achsparallele Mantellinie des Trommelmantels schneidenden Schrägstellung (W) auf einem Nabenteil (29) abgestützt sind.

## Claims

1. Device for separating solid materials from an air stream (D) by means of a housing drum (4) containing a cellular wheel (5) mounted so as to be capable of rotating and connected to the air stream by a cellular-wheel hatch (3) provided with an opening (2), which exhibits on the one side in at least one area a sieve (8) which separates coarse solid particles form the air stream (D) and, on the other side, a discharge opening (9) for the separated coarse solid particles (M) and whereby an air stream (E) still containing dust-like fine particles is led away in the flow direction behind the sieve (8) to a dust filter (10), **characterised in that** in the flow direction of the dust-laden air stream D behind an essentially horizontal upper region (12) of the sieve, facing the dust filter (10), the cellular-wheel hatch (3) is provided with an air stream deflection (F') which results in a surface-dust removal activity on its rear-side area (12).

2. Device in accordance with claim 1, **characterised in that** the passage openings (15) in the upper area (12) of the sieve (8) are formed with a passage contour which imposes a directional component on the air stream (E, E') for the surface removal of dust.

3. Device in accordance with claim 1 or 2, **characterised in that** the passage openings (15) in the upper region (12) of the sieve (8) are provided with a guiding surface profile (16).

4. Device in accordance with one of the claims 1 to 3, **characterised in that** the cellular-wheel hatch (3) above the sieve (8) has an additional compressed air inlet (19) for the air stream deflection (F').

5. Device in accordance with one of the claims 1 to 4, **characterised in that** the cellular-wheel hatch (3) together with the sieve (8), the dust filter (10) catching the fine particles of the air stream (E) and main-fan assembly (13) producing the air stream (D, D') at negative pressure constitute a superimposed construction unit (A, B, C).

6. Device in accordance with one of the claims 1 to 5, **characterised in that** the cellular-wheel hatch (3) in close proximity to the housing drum (4) accommodating the sieve (8) has a subsidiary hatch (14) for the removal of the fine particles (11') separated out by the dust filter (10).

7. Device in accordance with claim 6, **characterised in that** the cellular-wheel hatch (3) and the subsidiary hatch (14) have a common drive (17).

8. Device in accordance with one of the claims 1 to 7, **characterised in that** in the zone of the upper main fan assembly (13) a compressed air feed (18) is provided which produces a cleaning air stream in the dust filter (10), flowing against the flow direction (E, E').

9. Device in accordance with one of the claims 1 to 8, **characterised in that** the construction unit (A, B, C) in the region of the cellular-wheel hatch (3) is connected to a switchable additional blower (21) to supply an additional volume of air and / or an external compressed air reservoir (22), which discharges above the connection opening (2) close to the housing drum (4).

10. Device in accordance with one of the claims 1 to 9, **characterised in that** the construction unit (A, B, C) is provided with a common electronic control unit for driving both hatches (3, 14), the main fan (13), the compressed air supply (18) for the cleaning air stream and the additional compressed air supply (19) into the cellular-wheel hatch (3).

11. Device in accordance with one of the claims 1 to 10, **characterised in that** the guiding surface profile (16) in the upper region (12) of the passage openings (15) is formed by their guide flaps (24) which extend the passage contour in the flow direction (E').

12. Device in accordance with claim 11, **characterised in that** the guide flaps (24) extend over only a part of the circumference of the passage opening (15).

13. Device in accordance with claim 11 or 12, **characterised in that** the guide flaps (24) are attached to that part of the circumferential element (25) of the passage opening (15) facing the air stream inlet and have an oblique setting (Angle W) imposing a directional component.

14. Device in accordance with one of the claims 11 to 13, **characterised in that** the guide flaps (24) are curved in the direction of the air flow (E') with a radius (R).

15. Device in accordance with one of the claims 11 to 14, **characterised in that** the cross-sectional area of the passage openings (15) is for all practical purposes fully covered by the guide flaps (24) when observed in plan view.

16. Device in accordance with one of the claims 1 to 15, **characterised in that** the cellular wheel (5) has at least two cell walls (27, 27') effective as extraction wings for the coarse solid particles (M) and forming the respective cells (26) which are supported on a hub element (29) at an oblique angle (W) cutting a jacket line parallel to the drum jacket.

## Revendications

1. Dispositif pour la séparation de solides dans un écoulement d'air (D), présentant un sas à roue cellulaire (3) muni d'un caisson en tambour (4) qui présente une roue cellulaire (5) soutenue à rotation et qui reçoit cet écoulement d'air par une ouverture de raccordement (2), le caisson en tambour présentant d'une part, au moins dans certaines parties, un tamis (8) qui sépare des particules solides grossières de l'écoulement d'air (D) et d'autre part une ouverture d'expulsion (9) des solides grossiers (M) séparés, un écoulement d'air (E) contenant encore des particules fines pulvérulentes étant amené à un filtre à poussières (10) disposé en aval du tamis (8) dans la direction d'écoulement, **caractérisé en ce que** par rapport à la direction d'écoulement de l'écoulement d'air (D) contenant des poussières, en aval d'une zone supérieure (12) du tamis (8), essentiellement horizontale, tournée vers le filtre à poussières (10), le sas à roue cellulaire (3) est doté d'une déviation (F') de l'écoulement d'air qui a pour effet une extraction des poussières sur toute la surface de sa zone (12) située à l'arrière.

2. Dispositif selon la revendication 1, **caractérisé en ce que** les ouvertures de passage (15) ménagées dans la zone supérieure (12) du tamis (8) sont configurées avec un contour de passage qui confère à l'écoulement d'air (E, E') une composante d'orientation qui permet l'extraction de poussières sur toute sa surface.

3. Dispositif selon la revendication 1 ou 2, **caractérisé en ce que** les ouvertures de passage (15) ménagées dans la zone supérieure (12) du tamis (8) présentent une surface profilée de guidage (16).

4. Dispositif selon l'une quelconque des revendications 1 à 3, **caractérisé en ce que** pour la déviation d'écoulement d'air (F'), le sas à roue cellulaire (3) présente au-dessus du tamis (8) une entrée supplémentaire (19) d'air comprimé.

5. Dispositif selon l'une quelconque des revendications 1 à 4, **caractérisé en ce que** le sas à roue cellulaire (3) avec son tamis (8), le filtre à poussières (10) qui collecte les particules fines de l'écoulement d'air (E) et un module principal de ventilateur (13) qui crée l'écoulement d'air (D, D') par dépression forment un module (A, B, C) dont les composants sont agencés les uns au-dessus des autres.

6. Dispositif selon l'une quelconque des revendications 1 à 5, **caractérisé en ce que** dans la zone proche de son caisson en tambour (14) qui présente le tamis (8), le sas à roue cellulaire (3) présente un sas secondaire (14) pour l'extraction des particules fines (11') séparées par le filtre à poussières (10).

7. Dispositif selon la revendication 6, **caractérisé en ce que** le sas à roue cellulaire (3) et le sas secondaire (14) présentent un entraînement (17) commun.

8. Dispositif selon l'une quelconque des revendications 1 à 7, **caractérisé en ce que** dans la zone du module principal supérieur de ventilateur (13) est prévue une amenée d'air comprimé (18) qui crée dans le filtre à poussières (10) un écoulement d'air de nettoyage opposé à la direction d'écoulement (E, E').

9. Dispositif selon l'une quelconque des revendications 1 à 8, **caractérisé en ce que** pour l'entrée supplémentaire d'air comprimé (19), le module (A, B, C) est relié dans la région du sas à roue cellulaire (3) à un ventilateur supplémentaire (21) qui peut être enclenché en complément et/ou à une réserve externe (22) d'air comprimé qui débouche au-dessus de l'ouverture de raccordement (2) à proximité du caisson en tambour (4).

10. Dispositif selon l'une quelconque des revendications 1 à 9, **caractérisé en ce que** le module (A, B, C) est doté d'une unité commune de commande électronique pour l'entraînement des deux sas (3, 14), pour le ventilateur principal (13), l'amenée d'air comprimé (18) de l'écoulement d'air de nettoyage et l'introduction supplémentaire d'air comprimé (19) dans le sas à roue cellulaire (3).

11. Dispositif selon l'une quelconque des revendications 1 à 10, **caractérisé en ce que** la surface profilée de guidage (16) est formée par des appendices de guidage (24) qui, dans la zone supérieure (12) des ouvertures de passage (15), prolongent le contour de passage de ces dernières dans la direction d'écoulement (E').

12. Dispositif selon la revendication 11, **caractérisé en ce que** les appendices de guidage (24) ne s'étendent que sur une partie de la périphérie des ouvertures de passage (15).

13. Dispositif selon la revendication 11 ou 12, **caractérisé en ce que** les appendices de guidage (24) sont placés sur la partie périphérique (25) des ouvertures de passage (15) qui est tournée vers l'admission de l'écoulement d'air, et **en ce qu'**ils présentent une position oblique (angle W) qui confère la composante d'orientation.

14. Dispositif selon l'une quelconque des revendications 11 à 13, **caractérisé en ce que** dans la direction d'écoulement (E'), les appendices de guidage (24) sont configurés en forme d'arc de cercle (rayon R).

15. Dispositif selon l'une quelconque des revendications 11 à 14, **caractérisé en ce que** vue en plan, la section transversale d'ouverture des orifices de passage (15) est recouverte essentiellement complètement par les appendices de guidage (24).

16. Dispositif selon l'une quelconque des revendications 1 à 15, **caractérisé en ce que** la roue cellulaire (5) présente au moins deux parois de cellules (27, 27') qui agissent comme ailes d'extraction pour les particules solides grossières (M) et qui forment les cellules (26) respectives, ces parois de cellules étant soutenues sur une partie (29) en forme de bec par un positionnement oblique (W) qui coupe une ligne d'enveloppe, parallèle à l'axe, de l'enveloppe du tambour.
